# EUROPEAN PATENT SPECIFICATION

(11) **EP 2 682 580 B1**
(45) Date of publication and mention of the grant of the patent: **15.11.2017**
(21) Application number: 13172998.0
(22) Date of filing: 20.06.2013
(51) Int. Cl.: F01N 3/20, F01N 3/025, F02N 11/08, F02D 41/04, F02D 33/00, F01N 3/10

(54) **Exhaust emission control system for internal combustion engine, and control method for exhaust emission control system**
Abgasemissionssteuerungssystem für einen Verbrennungsmotor und Steuerungsverfahren für Abgasemissionssteuerungssystem
Système de commande d'émission d'échappement pour moteur à combustion interne et procédé de commande dudit système

(30) Priority: 02.07.2012 JP 2012148722
(43) Date of publication of application: 08.01.2014
(73) Proprietor: TOYOTA JIDOSHA KABUSHIKI KAISHA, Toyota-shi, Aichi-ken, 471-8571 (JP)
(72) Inventor: OTA, Hirohiko, Toyota-shi, Aichi-ken, 471-8571 (JP)
(74) Representative: Kuhnen & Wacker

(56) References cited:
- EP-A1- 2 166 208
- EP-A1- 2 447 495
- US-A1- 2010 229 532
- US-A1- 2010 307 142
- US-A1- 2012 036 838

## Description

### BACKGROUND OF THE INVENTION

### 1. Field of the Invention

The invention relates to an exhaust emission control system for an internal combustion engine and a control method for the exhaust emission control system.

### 2. Description of Related Art

For example, as is described in Japanese Patent Application Publication JP 2010-071270 A, there is known an exhaust emission control system for an internal combustion engine, which includes a NOx purification catalyst and a reducing agent supply mechanism. The NOx purification catalyst purifies nitrogen oxides (NOx) in exhaust gas. The reducing agent supply mechanism supplies a reducing agent to an exhaust passage. The reducing agent is utilized to purify NOx at the NOx purification catalyst. In the reducing agent supply mechanism, urea aqueous solution that serves as the reducing agent is supplied to an addition valve via a supply tube. The urea aqueous solution is stored in a tank. The urea aqueous solution is injected from the addition valve to the exhaust passage. The injected urea aqueous solution is heated by the heat of exhaust gas. Thus, the urea aqueous solution changes into ammonia by the hydrolysis of urea. The ammonia is supplied to the NOx purification catalyst and is adsorbed by the NOx purification catalyst. Thus, NOx flowing into the NOx purification catalyst is reduced and purified.

In the internal combustion engine described in JP 2010-071270 A, engine operation is automatically stopped when a predetermined stop condition is satisfied, and engine operation is automatically restarted when a predetermined restart condition is satisfied. Then, in the exhaust emission control system described in JP 2010-071270 A, at the time of a manual stop of the internal combustion engine through off operation of an ignition switch, the reducing agent is recovered from the supply tube of the reducing agent supply mechanism. Thus, damage to the supply tube is suppressed. Damage to the supply tube occurs due to freezing of the reducing agent remaining in the supply tube during an engine stop. On the other hand, at the time of an automatic stop of the internal combustion engine, recovery of the reducing agent from the supply tube is prohibited.

Incidentally, during an automatic stop of the internal combustion engine, high-temperature exhaust gas stays in the exhaust passage. Therefore, when the reducing agent remains in the addition valve at the time of an automatic stop of engine operation, the reducing agent in the addition valve boils due to the heat of high-temperature exhaust gas. Thus, the metal material of the addition valve may corrode. Then, it is conceivable that, in order to suppress corrosion of the addition valve, the reducing agent is recovered from the supply tube at the time of an automatic stop as in the case of the method at the time of a manual stop. However, when the reducing agent is recovered from the supply tube in the same manner as the method performed at the time of a manual stop, it takes time to supply the reducing agent to the addition valve at the time of an automatic restart of engine operation. Thus, it is not possible to promptly add the reducing agent into the exhaust passage.

Another exhaust purification system for a vehicle is disclosed by United States Patent Application US 2012/0036838 A1. In the exhaust purification system for a vehicle equipped with purge control means for executing a purge treatment that recovers a reducing agent remaining inside a reducing agent supply section after an internal combustion engine is stopped, the purge control means executes the purge treatment in a case corresponding to at least one of a case where it has been determined that the internal combustion engine will not be restarted for a predetermined amount of time or longer when the internal combustion engine is stopped or a case where it has been determined that the stopping of the internal combustion engine is not due to control that causes the internal combustion engine to automatically stop when a predetermined idling stop condition has been met.

### SUMMARY OF THE INVENTION

The invention provides an exhaust emission control system for an internal combustion engine, which is able to promptly start injection of a reducing agent from an addition valve at the time of an automatic restart of engine operation while suppressing metallic corrosion of the addition valve due to boiling of the reducing agent remaining in the addition valve at the time of an automatic stop of engine operation, and a control method for the exhaust emission control system.

A first aspect of the invention as set forth in claim 1 provides an exhaust emission control system that is applied to an internal combustion engine in which an automatic stop of engine operation is carried out when a predetermined stop condition is satisfied and an automatic restart of engine operation is carried out when a predetermined start condition is satisfied, that includes an addition valve that supplies a reducing agent to an exhaust passage and a supply tube that supplies the reducing agent to the addition valve, and that recovers the reducing agent in the supply tube at the time of a manual stop of engine operation as a result of off operation of an ignition switch. The exhaust emission control system includes control means that carries out reducing agent recovery control at the time of the automatic stop of engine operation to recover the reducing agent in the addition valve and the supply tube, wherein a recovery amount of the reducing agent and a counter determination value corresponding to the recovery amount of the reducing agent are set based on an exhaust gas temperature, and wherein the amount of the reducing agent recovered from the supply tube is smaller than the recovery amount of the reducing agent at the time of the manual stop of engine operation.

In the above configuration, the reducing agent is recovered from the supply tube not only at the time of the manual stop of the internal combustion engine but also at the time of the automatic stop of the internal combustion engine. Therefore, at the time of the automatic stop as well, the reducing agent is recovered from the distal end portion of the addition valve, which is exposed to high-temperature exhaust gas. Thus, it is possible to suppress corrosion of the metal material of the addition valve by suppressing boiling of the reducing agent in the addition valve at the time of the automatic stop of engine operation. In addition, when the reducing agent is recovered at the time of the automatic stop, a smaller amount of the reducing agent than the recovery amount of the reducing agent at the time of the manual stop is recovered. Therefore, at the time of the automatic stop, it is possible to cause a larger amount of the reducing agent to remain in the supply tube as compared to that at the time of the manual stop. Thus, by promptly supplying the reducing agent to the addition valve at the time of the automatic restart, it is possible to promptly inject the reducing agent from the addition valve to the exhaust passage.

In the exhaust emission control system according to the first aspect of the invention, the recovery amount of the reducing agent at the time of the automatic stop may increase as a temperature of exhaust gas in the exhaust passage at the time of the automatic stop rises.

When the temperature of exhaust gas is high, the supply tube also easily rises in temperature. Therefore, when the reducing agent remains in the supply tube, the reducing agent easily boils in the supply tube, and the metal material of the supply tube easily corrodes. With the above configuration, as the temperature of exhaust gas is higher and the reducing agent more easily boils in the supply tube, a larger amount of the reducing agent is recovered. Therefore, it is possible to suppress corrosion of the supply tube by suppressing boiling of the reducing agent in the supply tube.

In the exhaust emission control system according to the first aspect of the invention, when a temperature of exhaust gas in the exhaust passage at the time of the automatic stop is higher than a predetermined temperature, the reducing agent may be injected from the addition valve at the time of the automatic stop and then the reducing agent may be recovered from the supply tube.

With the above configuration, when the temperature of exhaust gas is higher than the predetermined temperature, the reducing agent is injected from the addition valve. When the reducing agent is injected, a relatively low-temperature reducing agent is supplied from, for example, a tank, or the like, to the addition valve, so the addition valve is cooled. In addition, the addition valve is cooled by the heat of vaporization of the reducing agent injected. Thus, it is possible to suppress damage to components that constitute the addition valve due to high-temperature heat.

In the exhaust emission control system according to the first aspect of the invention, an injection amount at the time when the reducing agent is injected from the addition valve at the time of the automatic stop may increase as the temperature of exhaust gas in the exhaust passage at the time of the automatic stop rises.

With the above configuration, as the temperature of exhaust gas is higher and the addition valve more easily rises in temperature, a larger amount of cooling reducing agent is injected. Therefore, it is possible to further cool the addition valve.

In the exhaust emission control system according to the first aspect of the invention, a period during which the reducing agent is injected from the addition valve at the time of the automatic stop may extend as the temperature of exhaust gas in the exhaust passage at the time of the automatic stop rises.

With the above configuration, as the temperature of exhaust gas is higher and the addition valve more easily rises in temperature, the period during which a cooling reducing agent is injected extends. Therefore, as the temperature of exhaust gas is higher and the addition valve more easily rises in temperature, it is possible to inject a larger amount of cooling reducing agent.

A second aspect of the invention as set forth in claim 7 provides a control method for an exhaust emission control system that is applied to an internal combustion engine in which an automatic stop of engine operation is carried out when a predetermined stop condition is satisfied and an automatic restart of engine operation is carried out when a predetermined start condition is satisfied, that includes an addition valve that supplies reducing agent to an exhaust passage and a supply tube that supplies the reducing agent to the addition valve, and that recovers the reducing agent in the supply tube at the time of a manual stop of engine operation as a result of off operation of an ignition switch. The control method includes, executing reducing agent recovery control at the time of the automatic stop of engine operation to recover the reducing agent in the addition valve and the supply tube, wherein a recovery amount of the reducing agent and a counter determination value corresponding to the recovery amount of the reducing agent are set based on an exhaust gas temperature, and wherein the amount of the reducing agent recovered from the supply tube at the time of automatic stop of engine operation is smaller than the recovery amount of the reducing agent at the time of the manual stop of engine operation.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view that shows an internal combustion engine and its surrounding configuration in an exhaust emission control system for an internal combustion engine according to an embodiment of the invention;
FIG. 2 is a flowchart that shows the procedure of executing urea aqueous solution recovery control at the time of an automatic stop in the embodiment;
FIG. 3 is a graph that shows the correlation between a temperature of exhaust gas and a recovery amount of urea aqueous solution in the embodiment;
FIGs. 4A and 4B are a flowchart that shows the procedure of executing urea aqueous solution injection and recovery control at the time of an automatic stop in the exhaust emission control system for an internal combustion engine according to the embodiment of the invention; and
FIG. 5 is a graph that shows the correlation between a temperature of exhaust gas and an injection amount of urea aqueous solution.

### DETAILED DESCRIPTION OF EMBODIMENTS

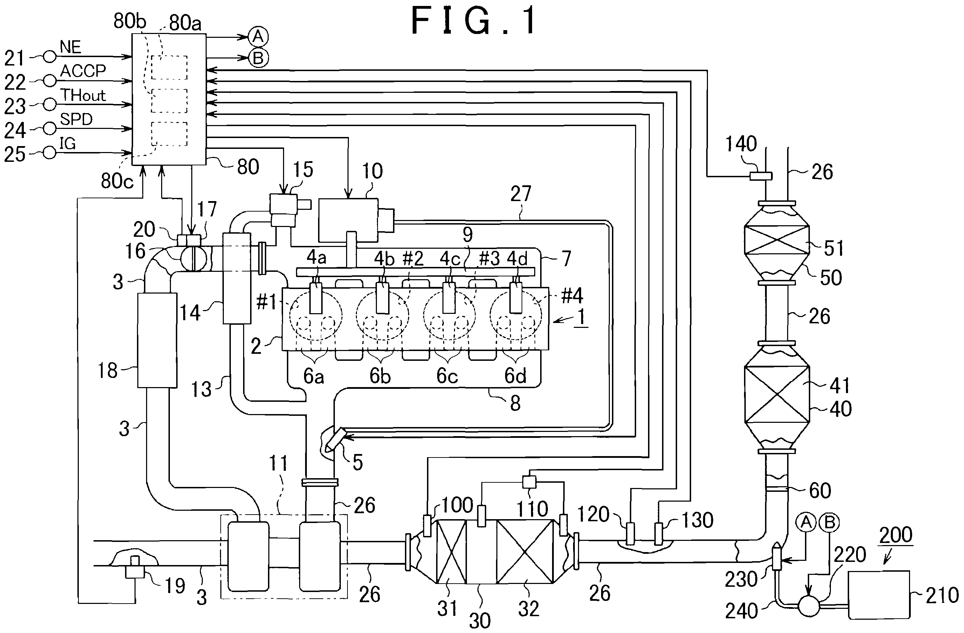

Hereinafter, one example embodiment of the exhaust emission control system for an internal combustion engine according to an embodiment of the invention will be described with reference to FIG. 1 to FIG. 3.

FIG. 1 shows an internal combustion engine to which an exhaust emission control system according to the present embodiment is applied and its surrounding mechanism. As shown in FIG. 1, the internal combustion engine 1 according to the present embodiment is a diesel engine. As shown in FIG. 1, the internal combustion engine 1 includes a plurality of cylinders #1 to #4. A plurality of fuel injection valves 4a to 4d are provided at a cylinder head 2. These fuel injection valves 4a to 4d inject fuel into combustion chambers of the respective cylinders #1 to #4. The cylinder head 2 has intake ports and exhaust ports 6a to 6d in correspondence with the respective cylinders #1 to #4. The intake ports are respectively used to introduce fresh air into the cylinders #1 to #4. The exhaust ports 6a to 6d are used to emit combustion gas to the outside of the cylinders.

The fuel injection valves 4a to 4d are connected to a common rail 9 that accumulates high-pressure fuel. The common rail 9 is connected to a supply pump 10. The supply pump 10 draws fuel in a fuel tank, and supplies high-pressure fuel to the common rail 9. High-pressure fuel supplied to the common rail 9 is injected from each of the fuel injection valves 4a to 4d into the corresponding cylinder at the time when each of the fuel injection valves 4a to 4d opens.

An intake manifold 7 is connected to the intake ports. The intake manifold 7 is connected to an intake passage 3. An intake air throttle valve 16 is provided in the intake passage 3. The intake air throttle valve 16 is used to adjust an intake air flow rate.

An exhaust manifold 8 is connected to the exhaust ports 6a to 6d. The exhaust manifold 8 is connected to the exhaust passage 26. A turbocharger 11 is provided in the exhaust passage 26. The turbocharger 11 supercharges intake air, which is introduced into the cylinders, by utilizing exhaust pressure. An intercooler 18 is provided in the intake passage 3 between an intake-side compressor of the turbocharger 11 and the intake air throttle valve 16. The intercooler 18 cools intake air of which the temperature is raised through supercharging of the turbocharger 11.

A first purification member 30 that purifies exhaust gas is provided downstream of an exhaust-side turbine of the turbocharger 11 in the exhaust gas flow direction in the exhaust passage 26. An oxidation catalyst 31 and a filter 32 are arranged inside the first purification member 30 in series in a direction in which exhaust gas flows.

A catalyst is supported on the oxidation catalyst 31. The catalyst oxidizes hydrocarbons (HC) in exhaust gas. The filter 32 is a member that traps particulate matter (PM) in exhaust gas. The filter 32 is formed of porous ceramics. A catalyst is supported on the filter 32. The catalyst is used to facilitate oxidation of PM. PM in exhaust gas is trapped at the time when exhaust gas passes through the porous wall of the filter 32.

A fuel addition valve 5 is provided near a collecting portion of the exhaust manifold 8. The fuel addition valve 5 is used to supply fuel to the oxidation catalyst 31 or the filter 32 as an additive. The fuel addition valve 5 is connected to the supply pump 10 via a fuel supply tube 27. The arrangement location of the fuel addition valve 5 may be changed as needed as long as the location is in an exhaust system upstream of the first purification member 30.

When the amount of PM trapped by the filter 32 exceeds a predetermined value, the process of regenerating the filter 32 is started. Thus, fuel is injected from the fuel addition valve 5 into the exhaust manifold 8. Fuel injected from the fuel addition valve 5 is burned as it reaches the oxidation catalyst 31. Thus, the temperature of exhaust gas is raised. Exhaust gas raised in temperature by the oxidation catalyst 31 flows into the filter 32, so the temperature of the filter 32 is raised. Thus, PM deposited in the filter 32 is oxidized, and the filter 32 is regenerated.

A second purification member 40 that purifies exhaust gas is provided in the exhaust passage 26 at a location downstream of the first purification member 30 in the exhaust gas flow direction. A selective reduction NOx catalyst (hereinafter, referred to as SCR catalyst) 41 is arranged inside the second purification member 40. The SCR catalyst 41 reduces and purifies NOx in exhaust gas by utilizing a reducing agent.

Furthermore, a third purification member 50 that purifies exhaust gas is provided in the exhaust passage 26 at a location downstream of the second purification member 40 in the exhaust gas flow direction. An ammonia oxidation catalyst 51 is arranged inside the third purification member 50. The ammonia oxidation catalyst 51 purifies ammonia in exhaust gas.

The internal combustion engine 1 includes an urea aqueous solution supply mechanism 200. The urea aqueous solution supply mechanism 200 supplies urea aqueous solution, which serves as a reducing agent, to the SCR catalyst 41. The urea aqueous solution supply mechanism 200 includes a tank 210, an urea aqueous solution addition valve 230, an urea aqueous solution supply tube 240 and a pump 220. The tank 210 stores urea aqueous solution. The urea aqueous solution addition valve 230 injects and supplies urea aqueous solution into the exhaust passage 26. The urea aqueous solution supply tube 240 connects the urea aqueous solution addition valve 230 to the tank 210. The urea aqueous solution supply tube 240 is made of a metal. The pump 220 is provided in the urea aqueous solution supply tube 240.

The urea aqueous solution addition valve 230 is made of a metal. Components, such as a coil, for opening the addition valve 230 are accommodated inside the urea aqueous solution addition valve 230. The urea aqueous solution addition valve 230 is provided in the exhaust passage 26 between the first purification member 30 and the second purification member 40. An injection hole of the urea aqueous solution addition valve 230 is directed toward the SCR catalyst 41. When the urea aqueous solution addition valve 230 is opened through energization of the coil, urea aqueous solution is injected and supplied into the exhaust passage 26 via the addition valve 230.

The pump 220 is an electric pump. When the pump 220 rotates in the forward direction, the pump 220 feeds urea aqueous solution from the tank 210 to the urea aqueous solution addition valve 230. In contrast, when the pump 220 rotates in the reverse direction, the pump 220 feeds urea aqueous solution from the urea aqueous solution addition valve 230 to the tank 210. That is, when the pump 220 rotates in the reverse direction, urea aqueous solution is recovered from the urea aqueous solution addition valve 230 and the urea aqueous solution supply tube 240, and is returned to the tank 210.

A dispersion plate 60 is provided in the exhaust passage 26 between the urea aqueous solution addition valve 230 and the SCR catalyst 41. The dispersion plate 60 facilitates atomization of urea aqueous solution by dispersing the urea aqueous solution injected from the urea aqueous solution addition valve 230.

Urea aqueous solution injected from the urea aqueous solution addition valve 230 changes into ammonia by the hydrolysis of urea due to the heat of exhaust gas. Then, the ammonia is supplied to the SCR catalyst 41 as the reducing agent for NOx. Ammonia supplied to the SCR catalyst 41 is adsorbed by the SCR catalyst 41, and is utilized to reduce NOx. Part of hydrolyzed ammonia is directly utilized to reduce NOx before being adsorbed by the SCR catalyst 41.

Other than the above, the internal combustion engine 1 includes an exhaust gas recirculation device (hereinafter, referred to as EGR device). The EGR device is a device that decreases a combustion temperature in the cylinders by introducing part of exhaust gas into intake air and, as a result, reduces the amount of NOx generated. The EGR device is formed of an EGR passage 13, an EGR valve 15, an EGR cooler 14, and the like. The EGR passage 13 provides fluid communication between the intake passage 3 and the exhaust manifold 8. The EGR valve 15 is provided in the EGR passage 13. An exhaust gas recirculation amount that is introduced from the exhaust passage 26 to the intake passage 3 is regulated by adjusting the opening degree of the EGR valve 15. That is, an EGR amount is regulated by adjusting the opening degree of the EGR valve 15. The temperature of exhaust gas flowing through the EGR passage 13 is decreased by the EGR cooler 14.

Various sensors for detecting an engine operating state are attached to the internal combustion engine 1. For example, an air flow meter 19 detects an intake air flow rate GA in the intake passage 3. A throttle valve opening degree sensor 20 detects the opening degree of the intake air throttle valve 16. An engine rotation speed sensor 21 detects the rotation speed of a crankshaft. That is, the engine rotation speed sensor 21 detects an engine rotation speed NE. An accelerator sensor 22 detects the depression amount of an accelerator pedal. That is, the accelerator sensor 22 detects an accelerator operation amount ACCP. An outside air temperature sensor 23 detects an outside air temperature THout. A vehicle speed sensor 24 detects a vehicle speed SPD of a vehicle on which the internal combustion engine 1 is mounted. An ignition switch 25 detects start operation and stop operation of the internal combustion engine 1, conducted by a driver of the vehicle.

A first exhaust gas temperature sensor 100 detects a first exhaust gas temperature TH1. The first exhaust gas temperature sensor 100 is provided upstream of the oxidation catalyst 31 in the exhaust gas flow direction. The first exhaust gas temperature TH1 is the temperature of exhaust gas before the exhaust gas flows into the oxidation catalyst 31. A differential pressure sensor 110 detects a pressure difference ΔP. The pressure difference ΔP is a pressure difference between an exhaust gas pressure upstream of the filter 32 in the exhaust gas flow direction and an exhaust gas pressure downstream of the filter 32 in the exhaust gas flow direction.

A second exhaust gas temperature sensor 120 and a first NOx sensor 130 are provided upstream of the urea aqueous solution addition valve 230 in the exhaust gas flow direction of the exhaust passage 26 between the first purification member 30 and the second purification member 40. The second exhaust gas temperature sensor 120 detects a second exhaust gas temperature TH2. The second exhaust gas temperature TH2 is the temperature of exhaust gas before the exhaust gas flows into the SCR catalyst 41. The first NOx sensor 130 detects a first NOx concentration N1. The first NOx concentration N1 is a NOx concentration in exhaust gas before the exhaust gas flows into the SCR catalyst 41.

A second NOx sensor 140 is provided in the exhaust passage 26 downstream of the third purification member 50 in the exhaust gas flow direction. The second NOx sensor 140 detects a second NOx concentration N2. The second NOx concentration N2 is the NOx concentration of exhaust gas purified by the SCR catalyst 41.

Outputs of these various sensors, and the like, are input to a control device 80. The control device 80 is mainly formed of a microcomputer that includes a central processing unit (CPU) 80a, a read only memory (ROM) 80b, a random access memory (RAM), a counter 80c, an input interface, an output interface, and the like. The read only memory 80b prestores various programs, maps, and the like. The random access memory temporarily stores computation results of the CPU, and the like. Electric power is supplied from a battery to each of the CPU 80a, the counter 80c and the above-described various sensors.

Various controls over the internal combustion engine 1 are executed by the control device 80. The various controls, for example, include fuel injection amount control/fuel injection timing control over the fuel injection valves 4a to 4d and the fuel addition valve 5, discharge pressure control over the supply pump 10, drive amount control over an actuator 17, opening degree control over the EGR valve 15, and the like. The actuator 17 opens or closes the intake air throttle valve 16.

The control device 80 executes automatic stop control and automatic restart control over the internal combustion engine 1. The automatic stop control and the automatic restart control are known, so, hereinafter, the outline of the automatic stop control and automatic restart control will be described. In the automatic stop control, for example, when the vehicle speed is "0" and an automatic stop condition that, for example, the accelerator pedal is not depressed, is satisfied, the control device 80 executes an automatic stop of engine operation on the condition that these conditions are satisfied. In the automatic restart control, when a restart condition that, for example, the accelerator pedal is depressed during an automatic stop, is satisfied, the control device 80 automatically restarts the internal combustion engine 1. In the present embodiment, when the above-described automatic stop condition for executing an automatic stop is satisfied, an automatic stop execution flag is set to an "ON" state. When the automatic stop condition for executing an automatic stop is not satisfied, the automatic stop execution flag is set to an "OFF" state. The control device 80 executes an automatic stop of engine operation on the condition that the automatic stop execution flag is set to the "ON" state.

Furthermore, the control device 80 executes various exhaust gas purification controls, such as the above-described regeneration process for burning PM trapped in the filter 32. The control device 80 executes control for adding urea aqueous solution with the use of the urea aqueous solution addition valve 230 as one of the exhaust gas purification controls. In the addition control, an urea additive amount just enough to reduce NOx that is emitted from the internal combustion engine 1 is calculated on the basis of the engine operating state, and the like. In the addition control, the valve opening state of the urea aqueous solution addition valve 230 is controlled such that the urea aqueous solution of the calculated urea additive amount is injected from the urea aqueous solution addition valve 230 to the exhaust passage 26. Thus, NOx in exhaust gas is reduced and purified. Addition of urea aqueous solution for reducing and purifying NOx is carried out continuously during engine operation. When engine operation is stopped, addition of urea aqueous solution for reducing NOx is also stopped. The urea aqueous solution addition control is stopped also during the above-described automatic stop of engine operation, and, when engine operation is automatically restarted, the urea aqueous solution addition control is automatically started.

In this way, when engine operation is stopped, addition of urea aqueous solution is also stopped. Here, the control device 80 executes recovery control at the time of a manual stop of the internal combustion engine 1. A manual stop of the internal combustion engine 1 is carried out through off operation of the ignition switch 25. The recovery control is executed by rotating the pump 220 in the reverse direction. In the recovery control, all the amount of urea aqueous solution in the urea aqueous solution addition valve 230 and the urea aqueous solution supply tube 240 is recovered. Thus, it is possible to suppress damage to the urea aqueous solution addition valve 230 or the urea aqueous solution supply tube 240. Damage to the urea aqueous solution addition valve 230 or the urea aqueous solution supply tube 240 occurs due to an increase in the volume of urea aqueous solution, remaining in the urea aqueous solution supply tube 240 or the urea aqueous solution addition valve 230, through freezing during a stop of the internal combustion engine 1.

Incidentally, during an automatic stop of the internal combustion engine 1, high-temperature exhaust gas stays in the exhaust passage 26. Therefore, when urea aqueous solution stays in the urea aqueous solution addition valve 230 during an automatic stop of the internal combustion engine 1, the urea aqueous solution in the urea aqueous solution addition valve 230 may boil due to the heat of high-temperature exhaust gas and the metal material of the urea aqueous solution addition valve 230 may corrode. Then, in the present embodiment, in order to suppress such corrosion of the urea aqueous solution addition valve 230, urea aqueous solution that has been supplied to the urea aqueous solution addition valve 230 is also recovered at the time of an automatic stop. When urea aqueous solution is recovered at the time of an automatic stop in a manner similar to that at the time of a manual stop, it takes time to supply urea aqueous solution to the urea aqueous solution addition valve 230 at the time of an automatic restart of engine operation. Thus, it is not possible to promptly execute addition control for adding urea aqueous solution to the exhaust passage 26. Then, in the present embodiment, at the time of an automatic stop, urea aqueous solution in an amount that is smaller than a recovery amount of urea aqueous solution at the time of a manual stop is recovered.

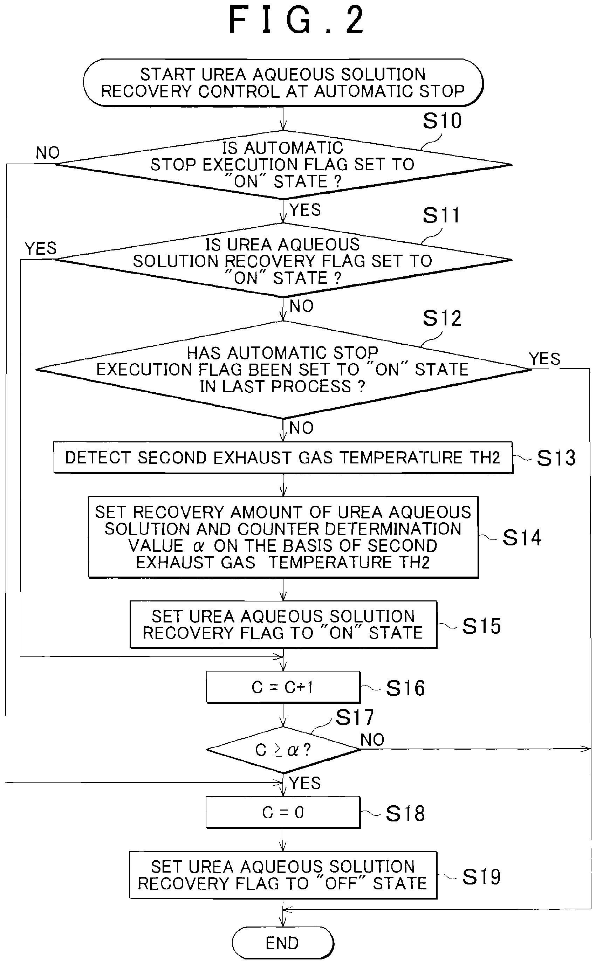

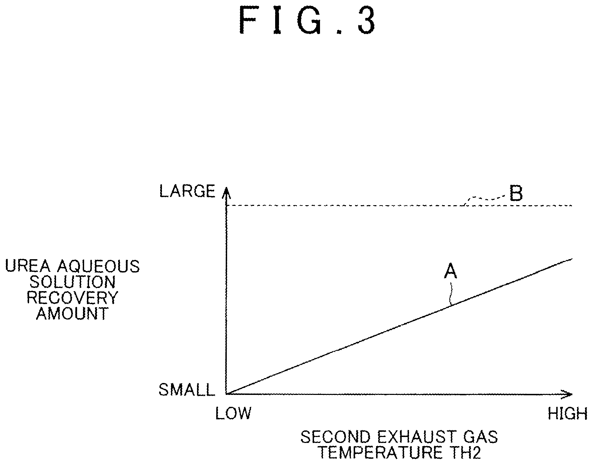

Hereinafter, recovery control for recovering urea aqueous solution at the time of an automatic stop will be described with reference to FIG. 2 and FIG. 3. The control device 80 executes urea aqueous solution recovery control at the time of an automatic stop in accordance with the procedure of processes shown in the flowchart of FIG 2. A series of processes shown in FIG 2 are executed as interrupt process at predetermined intervals at the time when the ignition switch 25 is in an ON state.

As shown in FIG. 2, when the urea aqueous solution recovery control at the time of an automatic stop is started, it is determined in step S10 whether the automatic stop execution flag is set to the "ON" state. As described above, when the automatic stop execution condition is satisfied, the automatic stop execution flag is set to the "ON" state. The control device 80 automatically stops engine operation through a process other than the process shown in FIG. 2. Thus, determination in step S10 as to whether the automatic stop execution flag is set to the "ON" state corresponds to determination as to whether an automatic stop of engine operation is being executed. When it is determined in step S10 that the automatic stop execution flag is not set to the "ON" state (NO in step S10), the process proceeds to step S18. In step S18, a count value C of the counter 80c is reset to "0". After the count value C is reset to "0", the process proceeds to step S19. In step S 19, an urea aqueous solution recovery flag is set to an "OFF" state. The count value C is to measure a recovery period of urea aqueous solution. In addition, the urea aqueous solution recovery flag is used for the control device 80 to execute recovery control for recovering urea aqueous solution in the urea aqueous solution addition valve 230 and the urea aqueous solution supply tube 240 on the condition that the urea aqueous solution recovery flag is set to the "ON" state. That is, when negative determination is made in step S10, the internal combustion engine 1 is in operation, and it is not required to execute urea aqueous solution recovery control during an automatic stop. Therefore, when negative determination is made in step S10, the count value C is reset to "0", and the urea aqueous solution recovery flag is set to the "OFF" state. Then, the control device 80 once ends the process. In step S18, when the count value has been already set to "0", the count value is kept at "0" as it is. In addition, in step S 19, when the urea aqueous solution recovery flag has been already set to the "OFF" state, the urea aqueous solution recovery flag is kept in the "OFF" state. On the other hand, when it is determined in step S10 that the automatic stop execution flag is set to the "ON" state (YES in step S10), it is estimated that an automatic stop has been carried out, so the process proceeds to step S11.

In step S11, it is determined whether the urea aqueous solution recovery flag is set to the "ON" state. When it is determined in step S11 that the urea aqueous solution recovery flag is not set to the "ON" state (NO in step S11), it is estimated that recovery control for recovering urea aqueous solution is not executed, and the process proceeds to step S12.

In step S12, it is determined whether the automatic stop execution flag has been set to the "ON" state in the last process. Information about the last process is stored in the RAM of the control device 80, and determination as to step S12 is carried out on the basis of the information stored in the RAM. When it is determined in step S12 that the automatic stop execution flag has not been set to the "ON" state in the last process (NO in step S12), the process proceeds to step S13. That is, when the urea aqueous solution recovery flag is not set to the "ON" state and the automatic stop execution flag has not been set to the "ON" state in the last process, the current process is the process that is executed immediately after the automatic stop execution flag enters the "ON" state. Therefore, it is estimated that urea aqueous solution recovery control has not been executed during the current automatic stop period. Then, in order to start urea aqueous solution recovery control, the process proceeds to step S13.

In step S 13, the second exhaust gas temperature TH2 that is the temperature of exhaust gas immediately before the exhaust gas flows into the SCR catalyst 41 is detected. The control device 80 detects the second exhaust gas temperature TH2 on the basis of a signal that is input from the second exhaust gas temperature sensor 120. That is, the control device 80 detects the temperature of exhaust gas in the exhaust passage 26 at the time of an automatic stop.

Subsequently, the process proceeds to step S14. In step S14, a recovery amount of urea aqueous solution and a counter determination value α corresponding to the recovery amount are set on the basis of the second exhaust gas temperature TH2. That is, in step S 14, a recovery amount of urea aqueous solution and a counter determination value α corresponding to the recovery amount are set on the basis of the temperature of exhaust gas in the exhaust passage 26 at the time of an automatic stop. Specifically, by applying the second exhaust gas temperature TH2 detected in step S 13 to the map shown in FIG. 3, the recovery amount of urea aqueous solution is set.

Here, in FIG 3, the solid line A indicates a recovery amount of urea aqueous solution at the time of an automatic stop, and the broken line B indicates a recovery amount of urea aqueous solution at the time of a manual stop through off operation of the ignition switch 25. The map is prestored in the ROM 80b of the control device 80. As indicated by the solid line A in FIG. 3, the recovery amount of urea aqueous solution at the time of an automatic stop is smaller than the recovery amount of urea aqueous solution at the time of a manual stop , indicated by the broken line B, and increases as the second exhaust gas temperature TH2 rises. In this way, in the present embodiment, by recovering urea aqueous solution also at the time of an automatic stop, boiling of urea aqueous solution in the urea aqueous solution addition valve 230 at the time of an automatic stop of engine operation is suppressed, with the result that corrosion of the metal material of the urea aqueous solution addition valve 230 is suppressed. In addition, the urea aqueous solution supply tube 240 tends to rise in temperature as the second exhaust gas temperature TH2 rises, so, by setting the recovery amount of urea aqueous solution to a larger amount, part of urea aqueous solution in the urea aqueous solution supply tube 240 is also recovered. This suppresses metallic corrosion of the urea aqueous solution supply tube 240 through boiling of a reducing agent in the urea aqueous solution supply tube 240.

As described above, in step S 14, the counter determination value α is set in correspondence with the set urea aqueous solution recovery amount. The counter determination value α is a value corresponding to a period during which the pump 220 is driven in order to recover urea aqueous solution in the set recovery amount. The counter determination value α is set to an integer larger than or equal to "1". That is, the recovery amount of urea aqueous solution is set to a larger amount as the temperature of exhaust gas rises, so the counter determination value α is also set to a larger value as the temperature of exhaust gas rises.

Subsequently, the process proceeds to step S 15. In step S 15, the urea aqueous solution recovery flag is set to the "ON" state. The control device 80 executes recovery of urea aqueous solution on the basis of the urea aqueous solution recovery flag set to the "ON" state. Specifically, the control device 80 recovers urea aqueous solution from the urea aqueous solution addition valve 230 and the urea aqueous solution supply tube 240 and returns the urea solution to the tank 210 by rotating the pump 220 in the reverse direction. The rotation speed of the pump 220 is set to a constant speed irrespective of the set recovery amount of urea aqueous solution. The recovery of urea aqueous solution is carried out continuously during a period in which the urea aqueous solution recovery flag is set to the "ON" state.

Subsequently, the process proceeds to step S16. In step S16, in order to measure a recovery period of urea aqueous solution, the count value C of the counter 80c is calculated. Specifically, the current count value C is calculated by adding "1" to the last count value C. In step S11 in the process shown in FIG. 2, when the urea aqueous solution recovery flag has been already set to the "ON" state in step S 15 in the last or previous process, it is determined that the urea aqueous solution recovery flag is set to the "ON" state (YES in step S11), the process proceeds from step S11 to step S16, and the count value C is calculated.

Subsequently, the process proceeds to step S17. In step S 17, it is determined whether the count value C is larger than or equal to the counter determination value α. When it is determined in step S17 that the count value C is smaller than the counter determination value α (NO in step S 17), it is estimated that urea aqueous solution in the recovery amount set in step S14 has not been recovered yet. Therefore, the control device 80 once ends the process.

On the other hand, when it is determined in step S 17 that the count value C is larger than or equal to the counter determination value α (YES in step S 17), the process proceeds to step S18. In step S18, the count value C of the counter 80c is reset to "0".

Subsequently, the process proceeds to step S19. In step S19, the urea aqueous solution recovery flag is set to the "OFF" state, and the control device once ends the process. That is, it is determined in step S17 that the count value C has reached the counter determination value α, so it is estimated that urea aqueous solution in the recovery amount set on the basis of the second exhaust gas temperature TH2 has been recovered. Therefore, after the count value C is reset to "0", the urea aqueous solution recovery flag is set to the "OFF" state. The control device 80 stops the pump 220 and stops recovering urea aqueous solution on the basis of the urea aqueous solution recovery flag set to the "OFF" state. When the second exhaust gas temperature TH2 is low, it may be possible to suppress boiling of urea aqueous solution in the urea aqueous solution addition valve 230 only by recovering a small amount of urea aqueous solution, such as only urea aqueous solution at a distal end portion of the urea aqueous solution addition valve 230. In such a case, the counter determination value α may be set to "1 ", and, in the initially executed process after an automatic stop, affirmative determination is made in step S17, the process sequentially proceeds through step S18 and step S19, and the control device 80 once ends the process.

When an automatic stop has been still continued after completion of recovery of urea aqueous solution, the process shown in FIG. 2 is executed. Then, affirmative determination is made in step S10, and, after negative determination is made in step S11, it is determined in step S12 that the automatic stop execution flag has also been set to the "ON" state in the last process (YES in step S12). In such a case, the process proceeds from step S12 to END, and the control device 80 once ends the process. That is, the urea aqueous solution recovery flag is not set to the "ON" state although an automatic stop is continued from the last process, so it is estimated that recovery of urea aqueous solution has been already completed after a start of the current automatic stop. Then, the control device 80 ends the process, and causes recovery of urea aqueous solution not to be carried out twice during a period of one automatic stop. Thus, urea aqueous solution more than necessary is not recovered.

When the automatic stop condition is not satisfied and the automatic restart is executed, it is determined in step S10 in the process shown in FIG 2 that the automatic stop execution flag is not in the "ON" state. Then, the process proceeds to step S18, and the count value is reset to "0". After that, in step S19, the urea aqueous solution recovery flag is set to the "OFF" state. Then, the control device 80 ends the process. When the automatic stop execution flag is set to the "OFF" state and engine operation is automatically restarted, a larger amount of urea aqueous solution remains in the urea aqueous solution supply tube 240 through urea aqueous solution recovery control at the time of an automatic stop as compared to that at the time of a manual stop. Thus, urea aqueous solution is promptly supplied to the urea aqueous solution addition valve 230, and urea aqueous solution is promptly injected from the urea aqueous solution addition valve 230 to the exhaust passage 26.

Next, the operation of the exhaust emission control system according to the present embodiment will be described. The control device 80 recovers urea aqueous solution from the urea aqueous solution supply tube 240 at the time of an automatic stop, so boiling of urea aqueous solution in the urea aqueous solution addition valve 230 is suppressed at the time of an automatic stop of engine operation. In addition, the recovery amount is smaller than that at the time of a manual stop of the internal combustion engine 1 as a result of off operation of the ignition switch 25, so a larger amount of urea aqueous solution remains in the urea aqueous solution supply tube 240 as compared to that at the time of a manual stop, urea aqueous solution is promptly supplied to the urea aqueous solution addition valve 230 at the time of an automatic restart, and urea aqueous solution is promptly injected from the urea aqueous solution addition valve 230 to the exhaust passage 26.

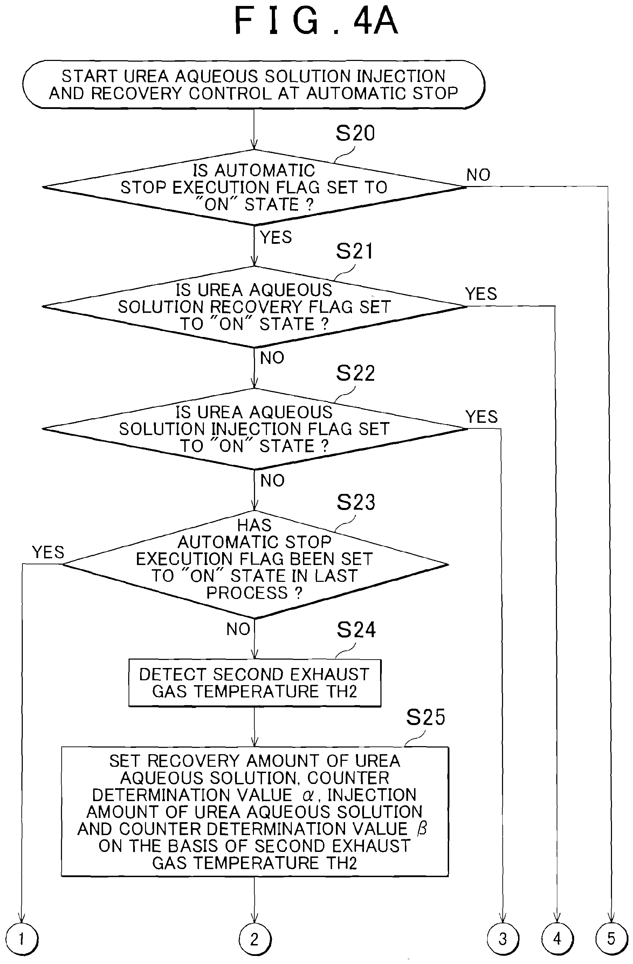

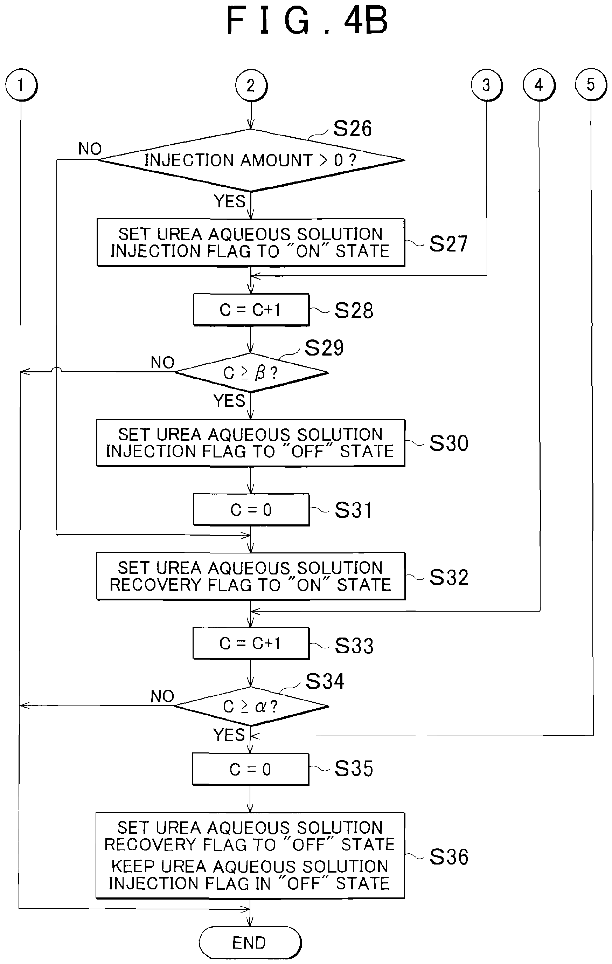

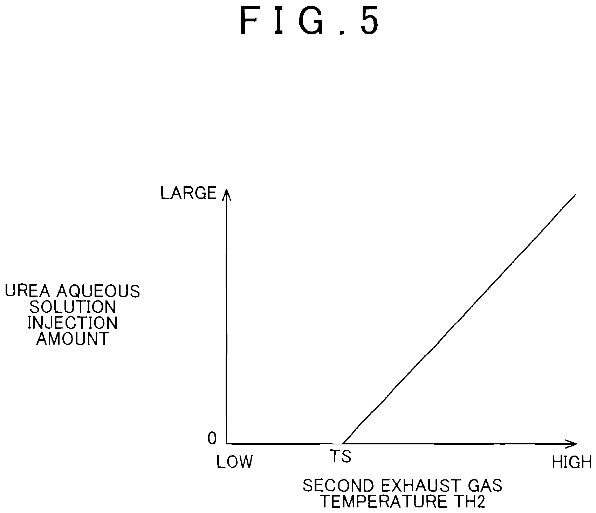

According to the above-described present embodiment, the following advantageous effects (1) and (2) are obtained.
(1) In the internal combustion engine 1 according to the present embodiment, through control of the control device 80, engine operation is automatically stopped when the predetermined automatic stop condition is satisfied; whereas engine operation is restarted when the predetermined automatic restart condition is satisfied. In addition, the exhaust emission control system includes the urea aqueous solution addition valve 230 that supplies urea aqueous solution to the exhaust passage 26 and the urea aqueous solution supply tube 240 that supplies urea aqueous solution to the urea aqueous solution addition valve 230. The control device 80 recovers urea aqueous solution in the urea aqueous solution supply tube 240 by driving the pump 220 at the time of a manual stop of the internal combustion engine 1 as a result of off operation of the ignition switch 25. Furthermore, the control device 80, at the time of an automatic stop, recovers urea aqueous solution from the urea aqueous solution supply tube 240 in an amount that is smaller than the recovery amount of urea aqueous solution at the time of a manual stop.
   Thus, not only at the time of a manual stop of the internal combustion engine 1 but also at the time of an automatic stop of the internal combustion engine 1, urea aqueous solution is recovered from the urea aqueous solution supply tube 240. Therefore, at the time of an automatic stop as well, urea aqueous solution is recovered from the distal end portion of the urea aqueous solution addition valve 230, which is exposed to high-temperature exhaust gas. Thus, it is possible to suppress corrosion of the metal material of the urea aqueous solution addition valve 230 by suppressing boiling of urea aqueous solution in the urea aqueous solution addition valve 230 at the time of an automatic stop of engine operation. In addition, when urea aqueous solution is recovered at the time of an automatic stop, urea aqueous solution in an amount that is smaller than a recovery amount of urea aqueous solution at the time of a manual stop is recovered. Therefore, at the time of an automatic stop, it is possible to cause a larger amount of urea aqueous solution to remain in the urea aqueous solution supply tube 240 as compared to that at the time of a manual stop. Thus, by promptly supplying urea aqueous solution to the urea aqueous solution addition valve 230 at the time of an automatic restart, it is possible to promptly inject urea aqueous solution from the urea aqueous solution addition valve 230 to the exhaust passage 26.
(2) In the present embodiment, the recovery amount of urea aqueous solution at the time of an automatic stop is increased as the temperature of exhaust gas in the exhaust passage 26 at the time of an automatic stop rises. When the exhaust gas temperature is high, the urea aqueous solution supply tube 240 also easily rises in temperature, so, when urea aqueous solution remains in the urea aqueous solution supply tube 240, urea aqueous solution easily boils in the urea aqueous solution supply tube 240, and the metal material of the urea aqueous solution supply tube 240 easily corrodes. In this respect, according to the present embodiment, a larger amount of urea aqueous solution is recovered as the exhaust gas temperature rises and urea aqueous solution more easily boils in the urea aqueous solution supply tube 240, so it is possible to appropriately suppress corrosion of the urea aqueous solution supply tube 240 by suppressing boiling of urea aqueous solution in the urea aqueous solution supply tube 240.
   Next, one embodiment of the invention will be described with reference to FIG. 1 and FIG. 3 to FIG. 5. The exhaust emission control system according to the present embodiment is applied to the internal combustion engine 1 that is a diesel engine shown in FIG. 1 as in the case of the above-described embodiment, and differs from the above-described embodiment in a control manner at the time when urea aqueous solution is recovered at the time of an automatic stop. Like reference numerals denote similar components to those of the above-described embodiment, and the description of the similar components is omitted where appropriate.
   In the present embodiment, when the temperature of exhaust gas in the exhaust passage 26 at the time of an automatic stop is higher than a predetermined temperature TS, urea aqueous solution is injected from the urea aqueous solution addition valve 230 at the time of an automatic stop. Then, by injecting urea aqueous solution from the urea aqueous solution addition valve 230, the urea aqueous solution addition valve 230 is cooled by relatively low-temperature urea aqueous solution supplied from the tank 210 to the urea aqueous solution addition valve 230 and heat of vaporization of urea aqueous solution. This suppresses damage to the components, such as the coil, that constitute the urea aqueous solution addition valve 230 due to high-temperature heat. In addition, in the present embodiment, after injecting urea aqueous solution in this way at the time of an automatic stop, as in the case of the above-described embodiment, in order to suppress boiling of urea aqueous solution in the urea aqueous solution addition valve 230, urea aqueous solution in the urea aqueous solution supply tube 240 is recovered.
   Hereinafter, urea aqueous solution injection and recovery control at the time of an automatic stop in the present embodiment will be described with reference to FIG 3 to FIG 5. The control device 80 executes urea aqueous solution recovery control at the time of an automatic stop in accordance with the procedure of processes shown in the flowchart of FIG 4A and FIG. 4B. A series of processes shown in FIG 4A and FIG. 4B are executed as interrupt process at predetermined intervals at the time when the ignition switch 25 is in an ON state.
   As shown in FIG 4A, when the urea aqueous solution injection and recovery control is started, it is determined in step S20 that the automatic stop execution flag is set to the "ON" state. When it is determined in step S20 that the automatic stop execution flag is not set to the "ON" state (NO in step S20), the process proceeds to step S35 in FIG. 4B. In step S35, the count value C of the counter 80c is reset to "0". After the count value C is reset to "0", the process proceeds to step S36. In step S36, the urea aqueous solution recovery flag and the urea aqueous solution injection flag both are set to the "OFF" state, and the control device 80 once ends the process. In the present embodiment, as will be described later, the count value C indicates an injection period during which the urea aqueous solution addition valve 230 carries out injection for cooling and a recovery period during which urea aqueous solution is recovered. In addition, the urea aqueous solution injection flag is used for the control device 80 to execute injection control for injecting urea aqueous solution at the time of an automatic stop on the condition that the urea aqueous solution injection flag is set to the "ON" state. That is, when negative determination is made in step S20, the internal combustion engine 1 is in operation, and it is not required to recover urea aqueous solution and to execute injection control for cooling the urea aqueous solution addition valve 230. Therefore, the count value C is reset to "0", and both the urea aqueous solution recovery flag and the urea aqueous solution injection flag are set to the "OFF" state. For example, when the count value C is already "0" and each of the urea aqueous solution recovery flag and the urea aqueous solution injection flag is already in the "OFF" state, the urea aqueous solution recovery flag and the urea aqueous solution injection flag are kept in the "OFF" state. On the other hand, when it is determined in step S20 that the automatic stop execution flag is set to the "ON" state (YES in step S20), the process proceeds to step S21.
   In step S21, it is determined whether the urea aqueous solution recovery flag is set to the "ON" state. When it is determined that the urea aqueous solution recovery flag is not set to the "ON" state (NO in step S21), the process proceeds to step S22. In step S22, it is determined whether the urea aqueous solution injection flag is set to the "ON" state. When it is determined that the urea aqueous solution injection flag is not in the "ON" state (NO in step S22), the process proceeds to step S23. In step S23, it is determined whether the automatic stop execution flag has been set to the "ON" state in the last process. When it is determined that the automatic stop execution flag has not been set to the "ON" state in the last process (NO in step S23), the current process is the process that is executed immediately after the automatic stop execution flag is set to the "ON" state. Therefore, in order to start urea aqueous solution injection and recovery control at the time of an automatic stop, the process proceeds to step S24.
   In step S24, the second exhaust gas temperature TH2 upstream of the SCR catalyst 41 is detected on the basis of a detection signal of the second exhaust gas temperature sensor 120. That is, in step S24, the second exhaust gas temperature TH2 upstream of the SCR catalyst 41 in the exhaust gas flow direction is detected on the basis of the detection signal of the second exhaust gas temperature sensor 120. Subsequently, the process proceeds to step S25. In step S25, on the basis of the second exhaust gas temperature TH2, a recovery amount of urea aqueous solution and a counter determination value α corresponding to the recovery amount are set, and an injection amount of urea aqueous solution and a counter determination value β corresponding to the injection amount are set. The recovery amount of urea aqueous solution and the counter determination value α are set by applying the detected second exhaust gas temperature TH2 to the map shown in FIG 3 as in the case of the above-described embodiment. In addition, the injection amount and the counter determination value β are set on the basis of a map shown in FIG. 5.
   Here, the map shown in FIG. 5 is prestored in the ROM 80b of the control device 80. As shown in FIG. 5, the injection amount of urea aqueous solution at the time of an automatic stop is "0" when the exhaust gas temperature is lower than or equal to the predetermined temperature TS, and is set so as to increase as the second exhaust gas temperature TH2 rises when the exhaust gas temperature exceeds the predetermined temperature TS. That is, when the exhaust gas temperature is lower than or equal to the predetermined temperature TS and the exhaust gas temperature is not so high, the components, such as the coil, that constitute the urea aqueous solution addition valve 230 are less likely to be damaged due to heat. Therefore, it is not required to cool the urea aqueous solution addition valve 230 by injecting urea aqueous solution. Thus, the injection amount is set to "0". On the other hand, when the exhaust gas temperature is higher than the predetermined temperature TS, the components that constitute the urea aqueous solution addition valve 230 are likely to be damaged due to heat, and, as the second exhaust gas temperature TH2 rises, the components that constitute the urea aqueous solution addition valve 230 are more likely to be damaged by heat. Therefore, the injection amount of urea aqueous solution is set to a large amount. Then, in step S25, the counter determination value β corresponding to the injection amount is set. The counter determination value β is a value that corresponds to a period during which the urea aqueous solution addition valve 230 is opened in order to inject urea aqueous solution in the set injection amount. The counter determination value P is set to an integer larger than or equal to "1" when the second exhaust gas temperature TH2 is higher than the predetermined temperature TS.
   Subsequently, the process proceeds to step S26. In step S26, it is determined whether the injection amount exceeds "0". When it is determined in step S26 that the injection amount exceeds "0" (YES in step S26), the process proceeds to step S27. In step S27, the urea aqueous solution injection flag is set to the "ON" state. The control device 80 executes injection of urea aqueous solution by opening the urea aqueous solution addition valve 230 on the basis of the urea aqueous solution injection flag set to the "ON" state. Injection of urea aqueous solution is carried out continuously during a period in which the urea aqueous solution injection flag is set to the "ON" state. Then, the process proceeds to step S28. In step S28, the current count value C is calculated by adding "1" to the count value C of the counter 80c. In this way, when the injection amount of urea aqueous solution based on the second exhaust gas temperature TH2 exceeds "0", urea aqueous solution is injected from the urea aqueous solution addition valve 230 in order to cool the addition valve 230.
   When the process shown in FIG. 4A and FIG. 4B is executed after the urea aqueous solution injection flag is set to the "ON" state in step S27 as described above, affirmative determination is made in the upstream step S22 (YES in step S22). Thus, in such a case, the process proceeds from step S22 to step S28, and the count value C is calculated.
   Subsequently, the process proceeds to step S29. In step S29, it is determined whether the count value C is larger than or equal to the counter determination value β. When it is determined that the count value C is not larger than or equal to the counter determination value β, it is estimated that urea aqueous solution in the injection amount set in step S25 has not been injected yet, so the control device 80 once ends the process.
   On the other hand, when it is determined in step S29 that the count value C is larger than or equal to the counter determination value β (YES in step S29), the process proceeds to step S30. In step S30, the urea aqueous solution injection flag is set to the "OFF" state. The control device 80 stops injection of urea aqueous solution on the basis of the urea aqueous solution injection flag set to the "OFF" state. That is, when it is determined that the count value C of the counter 80c is larger than or equal to the counter determination value β, it is estimated that urea aqueous solution in the injection amount set on the basis of the temperature of exhaust gas in the exhaust passage 26 during an automatic stop has been injected, so injection of urea aqueous solution is ended. Even when the second exhaust gas temperature TH2 is higher than the predetermined temperature TS but is not so high, a small injection amount of urea aqueous solution may still be able to cool the urea aqueous solution addition valve 230 to such an extent that it is possible to suppress heat damage to the addition valve 230. In such a case, the counter determination value P is set to "1" in the upstream step S25. Therefore, in the process initially executed after an automatic stop, affirmative determination is made in step S29 (YES in step S29), and the process proceeds to step S30. After step S30, the process proceeds to step S31, and the count value C of the counter 80c is reset to "0".
   Subsequently, the process proceeds to step S32. In step S32, the urea aqueous solution recovery flag is set to the "ON" state. The control device 80 executes recovery of urea aqueous solution on the basis of the urea aqueous solution recovery flag set to the "ON" state. Thus, the control device 80 recovers urea aqueous solution from the urea aqueous solution addition valve 230 and the urea aqueous solution supply tube 240 and returns the urea solution to the tank 210 by rotating the pump 220 in the reverse direction. The recovery of urea aqueous solution is carried out continuously during a period in which the urea aqueous solution recovery flag is set to the "ON" state. When it is determined in the upstream step S26 that the injection amount does not exceed "0" (NO in step S26), the process proceeds from step S26 to step S32 by skipping the above-described processes in step S27 to step S31. In step S32, the urea aqueous solution recovery flag is set to the "ON" state. That is, when the injection amount does not exceed "0", the injection amount "0" is set to "0" because it is not required to cool the urea aqueous solution addition valve 230 by injecting urea aqueous solution. Thus, it is not required to execute injection of urea aqueous solution in advance of recovery of urea aqueous solution, so the process proceeds to step S32 without executing injection control for injecting urea aqueous solution, and the urea aqueous solution recovery flag is set to the "ON" state.
   Subsequently, the process proceeds to step S33. In step S33, the count value C of the counter 80c is calculated. Specifically, the current count value C is calculated by adding "1" to the last count value C. When the process shown in FIG 4A and FIG.4B is executed after the urea aqueous solution recovery flag is set to the "ON" state in step S32 as described above, affirmative determination is made in the upstream step S21 (YES in step S21). Then, the process proceeds from step S21 to step S33, and the count value C is calculated.
   Then, the process proceeds from step S33 to step S34. In step S34, it is determined whether the count value C has reached the counter determination value α. When it is determined in step S34 that the count value C is smaller than the counter determination value α (NO in step S34), urea aqueous solution in the recovery amount set in step S25 has not been recovered yet, so the control device 80 once ends the process.
   When it is determined that the count value C is larger than or equal to the counter determination value α (YES in step S34), the process proceeds to step S35. In step S35, the count value C of the counter 80c is reset to "0". Subsequently, the process proceeds to step S36. In step S36, the urea aqueous solution recovery flag is set to the "OFF" state, the urea aqueous solution injection flag is kept in the "OFF" state, and the control device 80 once ends the process. That is, when the count value C is larger than or equal to the counter determination value α, urea aqueous solution in the recovery amount based on the second exhaust gas temperature TH2 has been recovered, so the count value is reset to "0", and then the control device 80 stops the pump 220 and stops recovering urea aqueous solution.
   When the process shown in FIG. 4A and FIG.4B is executed in the case where an automatic stop is continued after recovery control for recovering urea aqueous solution at the time of an automatic stop has been completed, it is determined in step S20 that the automatic stop execution flag is set to the "ON" state, and it is determined in step S21 that the urea aqueous solution recovery flag is not in the "ON" state, so the process proceeds to step S22. Then, it is determined in step S22 that the urea aqueous solution injection flag is not set to the "ON" state, and the process proceeds to step S23. It is determined in step S23 that the automatic stop execution flag has been set to the "ON" state in the last process (YES in step S23), so the control device 80 once ends the process. That is, when the automatic stop execution flag has been set to the "ON" state in the last process, and when the urea aqueous solution recovery flag is not set to the "ON" state and the urea aqueous solution injection flag is also not set to the "ON" state, it may be estimated that these controls have been already completed after a start of an automatic stop or injection of urea aqueous solution is not required and recovery of urea aqueous solution has been already executed. Then, when affirmative determination is made in step S23, the control device 80 ends the process.
   Next, the operation of the exhaust emission control system according to the present embodiment will be described. When the temperature of exhaust gas in the exhaust passage 26 at the time of an automatic stop is higher than the predetermined temperature TS, the control device 80 injects urea aqueous solution from the urea aqueous solution addition valve 230 at the time of an automatic stop, and then recovers urea aqueous solution from the urea aqueous solution supply tube 240. By injecting urea aqueous solution from the urea aqueous solution addition valve 230, the urea aqueous solution addition valve 230 is cooled by relatively low-temperature urea aqueous solution supplied from the tank 210 toward the urea aqueous solution addition valve 230 and heat of vaporization of urea aqueous solution. After that, urea aqueous solution is recovered from the urea aqueous solution supply tube 240. Thus, urea aqueous solution is recovered from the urea aqueous solution addition valve 230, so it is possible to suppress boiling of urea aqueous solution in the urea aqueous solution addition valve 230. The recovery amount is smaller than that at the time of a manual stop of the internal combustion engine 1 as a result of off operation of the ignition switch 25. Therefore, a larger amount of urea aqueous solution remains in the urea aqueous solution supply tube 240 as compared to that at the time of a manual stop. Thus, at the time of an automatic restart, urea aqueous solution is promptly added from the urea aqueous solution addition valve 230 to the exhaust passage 26.
   According to the above-described present embodiment, advantageous effects similar to (1) and (2) of the above-described embodiment and advantageous effects of the following (3) to (5) are obtained.
(3) In the exhaust emission control system according to the present embodiment, when the temperature of exhaust gas in the exhaust passage 26 at the time of an automatic stop is higher than the predetermined temperature TS, urea aqueous solution is injected from the urea aqueous solution addition valve 230 at the time of an automatic stop, and then urea aqueous solution is recovered from the urea aqueous solution supply tube 240. In this way, when urea aqueous solution is injected, relatively low-temperature urea aqueous solution is supplied from the tank 210 to the urea aqueous solution addition valve 230. Therefore, the urea aqueous solution addition valve 230 is cooled. In addition, the urea aqueous solution addition valve 230 is cooled by the heat of vaporization of injected urea aqueous solution. Thus, it is possible to suppress damage to the components, such as the coil, that constitute the urea aqueous solution addition valve 230 due to high-temperature heat.
(4) In the exhaust emission control system according to the present embodiment, the injection amount at the time when urea aqueous solution is injected from the urea aqueous solution addition valve 230 at the time of an automatic stop increases as the temperature of exhaust gas in the exhaust passage 26 at the time of an automatic stop rises. In this way, as the exhaust gas temperature rises and the urea aqueous solution addition valve 230 more easily rises in temperature, a larger amount of cooling urea aqueous solution is injected, so it is possible to further cool the urea aqueous solution addition valve 230.
(5) In the exhaust emission control system according to the present embodiment, the injection period in which urea aqueous solution is injected from the urea aqueous solution addition valve 230 at the time of an automatic stop extends as the temperature of exhaust gas in the exhaust passage 26 at the time of an automatic stop rises. In this way, as the exhaust gas temperature rises and the urea aqueous solution addition valve 230 more easily rises in temperature, the period in which cooling urea aqueous solution is injected extends, so, as the exhaust gas temperature rises and the urea aqueous solution addition valve 230 more easily rises in temperature, it is possible to inject cooling urea aqueous solution in a larger amount.

The invention is not limited to the modes illustrated in the above-described embodiments. The invention may be modified as follows. In the above-described embodiments, the recovery amount, the counter determination value α, the injection amount and the counter determination value β are set on the basis of the second exhaust gas temperature TH2; instead, the counter determination values α, β may be directly set on the basis of the second exhaust gas temperature TH2. In addition, separate counters may be respectively used to calculate the recovery period and the injection period.

In the above-described embodiments, the recovery amount of urea aqueous solution is increased as the exhaust gas temperature rises, and the recovery period (counter determination value α) is extended as the recovery amount increases. Instead, it is also applicable that the recovery amount is increased by increasing the rotation speed at the time of rotating the pump in the reverse direction as the exhaust gas temperature rises.

In the above-described embodiments, at the time of an automatic stop, the recovery amount of urea aqueous solution is increased as the temperature of exhaust gas in the exhaust passage rises; instead, the recovery amount of urea aqueous solution may be constant irrespective of the temperature of exhaust gas in the exhaust passage. In such a case as well, it is possible to recover urea aqueous solution from the distal end of the urea aqueous solution addition valve, at which the temperature easily rises. Therefore, it is possible to suppress metallic corrosion of the urea aqueous solution addition valve due to boiling of urea aqueous solution in the urea aqueous solution addition valve by suppressing the boiling of urea aqueous solution.

In the above-described embodiments, at the time of injecting urea aqueous solution in order to cool the urea aqueous solution addition valve, the injection amount is increased by extending the injection period as the exhaust gas temperature rises. Here, in the above-described embodiments, the number of injection operations is one, and the injection period is extended as the injection amount increases. However, the number of injection operations carried out during a constant period may be increased as the exhaust gas temperature rises. In addition, it is also applicable that the injection period is constant and the injection amount is increased by raising the injection pressure as the exhaust gas temperature rises.

In the above-described embodiments, by detecting the second exhaust gas temperature TH2 with the use of the exhaust gas temperature sensor at the time of a start of an automatic stop, the temperature of exhaust gas in the exhaust passage at the time of an automatic stop is detected. However, there is exhaust gas, emitted into the exhaust passage immediately before execution of an automatic stop, in the exhaust passage at the time of an automatic stop. Therefore, it is applicable that the temperature of exhaust gas immediately before execution of an automatic stop and the recovery amount and injection amount of urea aqueous solution are set on the basis of the temperature of exhaust gas. In addition, it is also applicable that the temperature of exhaust gas in the exhaust passage at the time of an automatic stop is estimated on the basis of an engine operating state just before an automatic stop is executed and then the recovery amount and injection amount of urea aqueous solution at the time of an automatic stop are set on the basis of the exhaust gas temperature. Specifically, for example, when the internal combustion engine is operated at a high load immediately before execution of an automatic stop, when regeneration control for regenerating the filter that traps PM is being executed, or the like, it may be estimated that the exhaust gas temperature is high and then the recovery amount and the injection amount may be increased. Furthermore, injection of urea aqueous solution and recovery of urea aqueous solution may be executed after a lapse of a predetermined period from a start of an automatic stop. In such a case, it is applicable that the temperature of exhaust gas in the exhaust passage is detected after a lapse of the predetermined period from a start of an automatic stop and then the recovery amount and injection amount of urea aqueous solution are set on the basis of the detected temperature.

In the above-described embodiments, when urea aqueous solution is recovered from the supply tube, the pump is rotated in the reverse direction; instead, urea aqueous solution may be recovered in another mode. For example, urea aqueous solution may be recovered by providing a selector valve, or the like, in the supply tube, and the selector valve, or the like, may change the flow direction of urea aqueous solution in the supply tube.

In the above-described embodiments, urea aqueous solution is used as the reducing agent; instead, another reducing agent may be used.

While the disclosure has been explained in conjunction with specific exemplary embodiments thereof, it is evident that many alternatives, modifications, and variations will be apparent to those skilled in the art. Accordingly, exemplary embodiments of the disclosure as set forth herein are intended to be illustrative, not limiting. There are changes that may be made without departing from the scope of the disclosure as defined by the appended claims.

## Claims

1. An exhaust emission control system that is applied to an internal combustion engine (1) in which an automatic stop of engine operation is carried out when a predetermined stop condition is satisfied and an automatic restart of engine operation is carried out when a predetermined start condition is satisfied, that includes an addition valve (230) that supplies a reducing agent to an exhaust passage (26) and a supply tube (240) that supplies the reducing agent to the addition valve (230), and that recovers the reducing agent in the supply tube (240) at the time of a manual stop of engine operation as a result of off operation of an ignition switch (25),
**characterized in that**:
the exhaust emission control system includes control means (80) that carries out reducing agent recovery control at the time of the automatic stop of engine operation to recover the reducing agent in the addition valve (230) and the supply tube (240), wherein a recovery amount of the reducing agent and a counter determination value (α) corresponding to the recovery amount of the reducing agent are set based on an exhaust gas temperature (TH2), and wherein the amount of the reducing agent recovered from the supply tube (240) at the time of automatic stop of engine operation is smaller than the recovery amount of the reducing agent at the time of the manual stop of engine operation.

2. The exhaust emission control system according to claim 1, **characterized in that**:
the counter determination value (α) is a value corresponding to a period during which a pump (220) is driven to recover the reducing agent in the set recovery amount in the reducing agent recovery control at the time of the automatic stop.

3. The exhaust emission control system according to claim 1 or 2, **characterized in that**:
the recovery amount of the reducing agent at the time of the automatic stop increases as a temperature of exhaust gas in the exhaust passage (26) at the time of the automatic stop rises.

4. The exhaust emission control system according to any one of claims 1 to 3, **characterized in that**:
when a temperature of exhaust gas in the exhaust passage (26) at the time of the automatic stop is higher than a predetermined temperature (TS), the reducing agent is injected from the addition valve (230) at the time of the automatic stop and then the reducing agent is recovered from the supply tube (240).

5. The exhaust emission control system according to claim 4, **characterized in that**:
an injection amount at the time when the reducing agent is injected from the addition valve (230) at the time of the automatic stop increases as the temperature of exhaust gas in the exhaust passage (26) at the time of the automatic stop rises.

6. The exhaust emission control system according to claim 5, **characterized in that**:
a period during which the reducing agent is injected from the addition valve (230) at the time of the automatic stop extends as the temperature of exhaust gas in the exhaust passage (26) at the time of the automatic stop rises.

7. A control method for an exhaust emission control system that is applied to an internal combustion engine (1) in which an automatic stop of engine operation is carried out when a predetermined stop condition is satisfied and an automatic restart of engine operation is carried out when a predetermined start condition is satisfied, that includes an addition valve (230) that supplies a reducing agent to an exhaust passage (26) and a supply tube (240) that supplies the reducing agent to the addition valve (230), and that recovers the reducing agent in the supply tube (240) at the time of a manual stop of engine operation as a result of off operation of an ignition switch (25), **characterized by** comprising the step of:
executing reducing agent recovery control at the time of the automatic stop of engine operation to recover the reducing agent in the addition valve (230) and the supply tube (240), wherein a recovery amount of the reducing agent and a counter determination value (α) corresponding to the recovery amount of the reducing agent are set based on an exhaust gas temperature (TH2), and wherein the amount of the reducing agent recovered from the supply tube (240) at the time of automatic stop of engine operation is smaller than the recovery amount of the reducing agent at the time of the manual stop of engine operation.

## Patentansprüche

1. Abgasemissionssteuersystem, das bei einer Verbrennungskraftmaschine (1) eingesetzt wird, in der ein automatischer Stopp des Betriebs der Maschine durchgeführt wird, wenn eine vorgegebene Stoppbedingung erfüllt ist, und ein automatischer Neustart des Betriebs der Maschine durchgeführt wird, wenn eine vorgegebene Startbedingung erfüllt ist, das ein Beigabeventil (230), das einem Abgastrakt (26) ein Reduktionsmittel zuführt, und eine Zuführleitung (240), die das Reduktionsmittel dem Beigabeventil (230) zuführt, und das das Reduktionsmittel in der Zuführleitung (240) zu der Zeit rückführt, da ein manueller Stopp des Betriebs der Maschine als Ergebnis eines Aus-Vorgangs eines Zündschalters (25) erfolgt,
**dadurch gekennzeichnet, dass**
das Abgasemissionssteuersystem eine Steuereinrichtung (80) beinhaltet, die eine Reduktionsmittelrückführsteuerung zu der Zeit durchführt, da der automatische Stopp des Betriebs der Maschine stattfindet, um das Reduktionsmittel in dem Beigabeventil (230) und der Zuführleitung (240) rückzuführen, wobei eine Rückführmenge des Reduktionsmittels und ein Zählerbestimmungswert (α), der der Rückführmenge des Reduktionsmittels entspricht, auf Basis einer Abgastemperatur (TH2) eingestellt werden, und wobei die Menge des Reduktionsmittels, die von der Zuführleitung (240) zu der Zeit des automatischen Stopps des Betriebs der Maschine rückgeführt wird, geringer ist als die Rückführmenge des Reduktionsmittels zu der Zeit des manuellen Stopps des Betriebs der Maschine.

2. Abgasemissionssteuersystem nach Anspruch 1, **dadurch gekennzeichnet, dass**:
der Zählerbestimmungswert (α) ein Wert ist, der einer Zeitspanne entspricht, während der eine Pumpe (220) angetrieben wird, um zu der Zeit des automatischen Stopps das Reduktionsmittel im Zuge der Reduktionsmittelrückführsteuerung in der eingestellten Rückführmenge rückzuführen.

3. Abgasemissionssteuersystem nach Anspruch 1 oder 2, **dadurch gekennzeichnet, dass**:
die Rückführmenge des Reduktionsmittels zu der Zeit des automatischen Stopps in dem Maße zunimmt, wie eine Temperatur des Abgases in der Abgasleitung (26) zu der Zeit des automatischen Stopps ansteigt.

4. Abgasemissionssteuersystem nach einem der Ansprüche 1 bis 3, **dadurch gekennzeichnet, dass**:
wenn eine Temperatur des Abgases in der Abgasleitung (26) zu der Zeit des automatischen Stopps höher ist als eine vorgegebene Temperatur (TS), das Reduktionsmittel von dem Beigabeventil (230) zu der Zeit des automatischen Stopps eingespritzt wird und dann das Reduktionsmittel von der Zuführleitung (240) rückgeführt wird.

5. Abgasemissionssteuersystem nach Anspruch 4, **dadurch gekennzeichnet, dass**:
eine Einspritzmenge zu der Zeit, wenn das Reduktionsmittel von dem Beigabeventil (230) zu der Zeit des automatischen Stopps eingespritzt wird, in dem Maße zunimmt, wie die Temperatur des Abgases in dem Abgastrakt (26) zu der Zeit des automatischen Stopps ansteigt.

6. Abgasemissionssteuersystem nach Anspruch 5, **dadurch gekennzeichnet, dass**:
sich eine Zeitspanne, während der das Reduktionsmittel von dem Beigabeventil (230) zu der Zeit des automatischen Stopps eingespritzt wird, in dem Maße verlängert, wie die Temperatur des Abgases in dem Abgastrakt (26) zu der Zeit des automatischen Stopps ansteigt.

7. Steuerverfahren für ein Abgasemissionssteuersystem, das bei einer Verbrennungskraftmaschine (1) eingesetzt wird, in der ein automatischer Stopp des Betriebs der Maschine durchgeführt wird, wenn eine vorgegebene Stoppbedingung erfüllt ist, und ein automatischer Neustart des Betriebs der Maschine durchgeführt wird, wenn eine vorgegebene Startbedingung erfüllt ist, das ein Beigabeventil (230), das einem Abgastrakt (26) ein Reduktionsmittel zuführt, und eine Zuführleitung (240), die das Reduktionsmittel dem Beigabeventil (230) zuführt, beinhaltet, und das das Reduktionsmittel in der Zuführleitung (240) zu der Zeit rückführt, da ein manueller Stopp des Betriebs der Maschine als Ergebnis eines Aus-Vorgangs eines Zündschalters (25) erfolgt, **dadurch gekennzeichnet, dass** es den folgenden Schritt aufweist:
Durchführen einer Reduktionsmittelrückführsteuerung zu der Zeit, da der automatische Stopp des Betriebs der Maschine stattfindet, um das Reduktionsmittel in dem Beigabeventil (230) und der Zuführleitung (240) rückzuführen, wobei eine Rückführmenge des Reduktionsmittels und ein Zählerbestimmungswert (α), der der Rückführmenge des Reduktionsmittels entspricht, auf Basis einer Abgastemperatur (TH2) eingestellt werden, und wobei die Menge des Reduktionsmittels, die von der Zuführleitung (240) zu der Zeit des automatischen Stopps des Betriebs der Maschine rückgeführt wird, geringer ist als die Rückführmenge des Reduktionsmittels zu der Zeit des manuellen Stopps des Betriebs der Maschine.

## Revendications

1. Système de commande d'émission d'échappement qui est appliqué sur un moteur à combustion interne (1) dans lequel une opération d'arrêt automatique du moteur est réalisée lorsqu'une condition d'arrêt prédéterminée est satisfaite et une opération de redémarrage automatique du moteur est réalisée lorsqu'une condition de démarrage prédéterminée est satisfaite, qui comprend une soupape d'addition (230) qui amène un agent réducteur à un passage d'échappement (26) et un tube d'alimentation (240) qui amène l'agent réducteur à la soupape d'addition (230), et qui récupère l'agent réducteur dans le tube d'alimentation (240) au moment d'une opération d'arrêt manuelle du moteur suite à l'opération d'arrêt d'un commutateur d'allumage (25),
**caractérisé en ce que** :
le système de commande d'émission d'échappement comprend un moyen de commande (80) qui réalise la commande de récupération d'agent réducteur au moment de l'opération d'arrêt automatique du moteur pour récupérer l'agent réducteur dans la soupape d'addition (230) et le tube d'alimentation (240), dans lequel une quantité de récupération de l'agent réducteur et une contre-valeur de détermination (α) correspondant à la quantité de récupération de l'agent réducteur sont déterminées en fonction d'une température de gaz d'échappement (TH2), et dans lequel la quantité d'agent réducteur récupérée du tube d'alimentation (240) au moment de l'opération d'arrêt automatique du moteur est inférieure à la quantité de récupération d'agent réducteur au moment de l'opération d'arrêt manuelle du moteur.

2. Système de commande d'émission d'échappement selon la revendication 1, **caractérisé en ce que** :
la contre-valeur de détermination (α) est une valeur correspondant à une période pendant laquelle une pompe (220) est entraînée pour récupérer l'agent réducteur dans la quantité de récupération de consigne dans la commande de récupération d'agent réducteur au moment de l'arrêt automatique.

3. Système de commande d'émission d'échappement selon la revendication 1 ou 2, **caractérisé en ce que** :
la quantité de récupération d'agent réducteur au moment de l'arrêt automatique augmente au fur et à mesure qu'une température du gaz d'échappement dans le passage d'échappement (26) au moment de l'arrêt automatique, monte.

4. Système de commande d'émission d'échappement selon l'une quelconque des revendications 1 à 3, **caractérisé en ce que** :
lorsqu'une température de gaz d'échappement dans le passage d'échappement (26) au moment de l'arrêt automatique est supérieure à une température (TS) prédéterminée, l'agent réducteur est injecté à partir de la soupape d'addition (230) au moment de l'arrêt automatique et ensuite l'agent réducteur est récupéré dans le tube d'alimentation (240).

5. Système de commande d'émission d'échappement selon la revendication 4, **caractérisé en ce que** :
une quantité d'injection au moment où l'agent réducteur est injecté par la soupape d'addition (230) au moment de l'arrêt automatique augmente au fur et à mesure que la température du gaz d'échappement dans le passage d'échappement (26) au moment de l'arrêt automatique, monte.

6. Système de commande d'émission d'échappement selon la revendication 5, **caractérisé en ce que** :
une période pendant laquelle l'agent réducteur est injecté à partir de la soupape d'addition (230) au moment de l'arrêt automatique s'étend au fur et à mesure que la température du gaz d'échappement dans le passage d'échappement (26) au moment de l'arrêt automatique, monte.

7. Procédé de commande pour un système de commande d'émission d'échappement qui est appliqué sur un moteur à combustion interne (1), dans lequel une opération d'arrêt automatique du moteur est réalisée lorsqu'une condition d'arrêt prédéterminée est satisfaite, et une opération de redémarrage automatique du moteur est réalisée lorsqu'une condition de démarrage prédéterminée est satisfaite, qui comprend une soupape d'addition (230) qui amène un agent réducteur à un passage d'échappement (26) et un tube d'alimentation (240) qui amène l'agent réducteur à la soupape d'addition (230), et qui récupère l'agent réducteur dans le tube d'alimentation (240) au moment d'une opération d'arrêt manuelle du moteur suite à l'opération d'arrêt d'un commutateur d'allumage (25), **caractérisé en ce qu'**il comprend l'étape suivants :
exécuter la commande de récupération d'agent réducteur au moment de l'arrêt automatique du moteur pour récupérer l'agent réducteur dans la soupape d'addition (230) et le tube d'alimentation (240), dans lequel une quantité de récupération de l'agent réducteur et une contre-valeur de détermination (α) correspondant à la quantité de récupération de l'agent réducteur sont déterminées en fonction de la température de gaz d'échappement (TH2) et dans lequel la quantité d'agent réducteur récupérée dans le tube d'alimentation (240) au moment de l'opération d'arrêt automatique du moteur est inférieure à la quantité de récupération de l'agent réducteur au moment de l'opération d'arrêt manuelle du moteur.
